## Europäisches Patentamt
## European Patent Office
## Office européen des brevets

(19)

(11) Numéro de publication: **0 112 778**
**B1**

(12)

# FASCICULE DE BREVET EUROPÉEN

(45) Date de publication du fascicule du brevet:
**29.04.87**

(51) Int. Cl.⁴: **B 60 F 1/04**

(21) Numéro de dépôt: **83402503.3**

(22) Date de dépôt: **21.12.83**

(54) **Plateau porteur destiné à recevoir un fourgon ou conteneur de marchandises, muni de moyens d'adaptation au transport par route, rail et mer.**

(30) Priorité: **22.12.82 FR 8221540**

(43) Date de publication de la demande:
**04.07.84 Bulletin 84/27**

(45) Mention de la délivrance du brevet:
**29.04.87 Bulletin 87/18**

(84) Etats contractants désignés:
**AT BE CH DE FR GB IT LI LU NL SE**

(56) Documents cité:
**FR-A-1 368 963**
**FR-A-2 395 852**

(73) Titulaire: **Perrot, Pierre Georges Joseph, 14 Rue de l'Abreuvoir, F-27320 Nonancourt (FR)**

(72) Inventeur: **Perrot, Pierre Georges Joseph, 14 Rue de l'Abreuvoir, F-27320 Nonancourt (FR)**

(74) Mandataire: **Polus, Camille, c/o Cabinet Lavoix 2, Place d'Estienne d'Orves, F-75441 Paris Cedex 09 (FR)**

EP 0 112 778 B1

LIBER, STOCKHOLM 1987

## Description

La présente invention a pour objet un plateau porteur destiné à recevoir un fourgon ou conteneur de marchandises, comportant des moyens d'auto-adaptation, soit à des bogies de chemin de fer, soit à un bogie à chenilles, soit à une structure de support dans un bateau pour le transport du fourgon par chemin de fer, par la route ou par mer, ce plateau porteur comprenant une ossature comportant deux longerons parallèles reliés par des traverses, ainsi qu'un train routier escamotable.

Ce plateau porteur peut également être attelé à un tracteur routier ou à un tracteur à chenilles. Comme on le sait, le transport des marchandises dans des conteneurs ou des fourgons pose encore de nombreux problèmes principalement dus aux ruptures de charges, alors qu'il existe généralement sur les lieux d'expédition ou de réception les moyens et engins de manutention spécifiques aux produits transportés.

L'invention a donc pour but de supprimer toutes les ruptures de charge susceptibles d'intervenir entre les lieux d'expédition et de réception, et ce quel que soit le mode d'acheminement des marchandises contenues dans le fourgon, c'est-à-dire par la route, par rail, par mer ou encore par des véhicules tous terrains tels que des tracteurs à chenilles.

On connaît une semi-remorque, correspondant au préambule de la revendication 1, munie d'un train routier combiné à un dispositif élévateur permettant la mise en place de l'arrière de la semi -remorque sur un bogie de chemin de fer, la mise en place de la partie avant s'effectuant à l'aide d'une béquille mécanique classique (FR-A-1 368 963).

Cette réalisation présente différents défauts: difficile respect simultané des règles de circulation routière de différents pays et des normes ferroviaires UIC tout en conservant un maximum de charges utiles; impossibilité d'utiliser les conteneurs aux normes ISO en circulation ferroviaire; nécessité de présenter la semi-remorque selon la disposition des bogies, l'avant et l'arrière étant différents. La mise en place sur le bogie avant est difficile en raison de l'emploi d'une béquille classique et de la nécessité de faire coincider avec un maximum de précision les axes du convoi routier et des bogies pour le transfert rail-route.

L'invention vise donc à obtenir la possibilité de transporter des produits du lieu d'expédition au lieu de réception quels que soient leurs emplacements géographiques, sans que le chargement ne quitte le plateau porteur, qui est donc agencé pour pouvoir s'adapter aisément au mode d'acheminement utilisé (route, rail, tous terrains, mer).

Suivant l'invention, les longerons sont profilés chacun en U renversé dont les branches sont prolongées sauf à leurs extrémités par des ailes latérales, chaque longeron présentant ainsi dans sa partie pourvue d'ailes un profil du genre oméga, les traverses reliant ces longerons dans leurs zones pourvues d'ailes tandis que leurs parties terminales extérieures à ces ailes sont assemblées par des platines d'appui sur des supports adaptables de façon connue en soi à des bogies ferroviaires et ce plateau porteur est équipé de dispositifs de roulement à galets libres logés dans les extrémités et à l'intérieur des longerons ainsi que de béquilles hydrauliques à course suffisante pour élever le plateau porteur, les dispositifs de roulement à galets pouvant prendre appui, soit sur des bogies de chemin de fer, soit sur des bogies routiers à chenilles, soit sur une structure de support dans un bateau, ledit plateau porteur étant en outre pourvu de vérins hydrauliques qui en combinaison avec les béquilles hydrauliques permettent la mise à quai ou l'enlèvement de conteneurs.

On comprend qu'il est ainsi possible de transférer le plateau porteur et sa charge d'un moyen de transport à un autre, par exemple d'un tracteur routier à des bogies de chemin de fer placés sous ses extrémités, en mettant en oeuvre des moyens prévus sur le plateau porteur lui-même et sur le support en cause, par exemple le bogie de chemin de fer.

L'invention inclut donc également des moyens d'adaptation et de centrage du plateau porteur réalisés sur les supports de celui-ci, notamment sur des bogies de chemin de fer et sur un bogie routier à chenilles, supprimant ainsi les ruptures de charges gênantes rencontrées avec les réalisations antérieures.

D'autres particularités et avantages de l'invention apparaîtront au cours de la description qui va suivre, faite en référence aux dessins annexés qui en illustrent plusieurs modes de réalistion et de mise en eouvre:

- la Figure 1 est une vue en élévation longitudinale d'un mode de réalisation du plateau porteur visé par l'invention, muni d'un train routier à trois essieux et supportant un fourgon de marchandises, ce plateau reposant sur le train routier et sur une béquille hydraulique avant:

- la Figure 2 est une vue en élévation longitudinale du plateau porteur et du fourgon de la Figure 1, monté sur deux bogies de circulation ferroviaire;

- la Figure 3 est une vue en élévation longitudinale du plateau porteur et de son fourgon attelés à un tracteur routier:

- la Figure 4 est une vue en élévation longitudinale du plateau porteur et de son fourgon attelés à un tracteur à chenilles et monté par sa partie arrière sur un bogie routier à chenilles;

- la Figure 5 est une vue en élévation longitudinale du plateau porteur et de son fourgon montés sur un structure de support d'un bateau pour le transport par mer;

- les Figures 6 à 9 sont des vues en élévation longitudinale de plusieurs modes de réalisation de plateau porteur selon l'invention, attelés à des tracteurs routiers et dont les trains routiers présentent diverses configurations pour respecter les règlements de la circulation routière en fonction du poids total roulant;

- la Figure 10 est une vue en élévation longitudinale d'un plateau porteur et de son conteneur montés sur deux bogies ferroviaires;

- la Figure 11 est une vue de dessus en plan d'un ensemble de plateaux porteurs arrimés sur le pont d'un bateau;

- les Figures 12 à 14 sont des vues en élévation illustrant les phases successives de la mise à quai d'un conteneur placé sur un plateau porteur selon l'invention, lequel fonctionne alors comme plateau élévateur mobile verticalement pour déposer son fourgon à quai:

- la Figure 15 est une vue en élévation du plateau porteur incliné au moyen de sa béquille hydraulique avant pour assurer la vidange d'une citerne installée dans sa superstructure:

- la Figure 16 est une vue en demi-coupe latérale et demi-élévation du plateau porteur et de son conteneur, montés sur un bogie ferroviaire:

- la Figure 17 est une vue en élévation montrant l'emplacement des roues pour un plateau dont le train routier comporte un, deux ou trois essieux;

- la Figure 18 est une vue en élévation montrant l'emplacement des roues lorsque le train routier, en raison du poids total roulant, doit être équipé de demi-essieux;

- la Figure 19 est une vue en élévation avec arrachements d'un mécanisme de suspension et de débattement d'une paire d'essieux (tandem):

- la Figure 20 est une vue en élévation longitudinale avec arrachement d'une extrémité du plateau porteur montée sur un bogie ferroviaire;

- la Figure 21 est une vue de dessus en plan du plateau porteur et du bogie de la Figure 20;

- la Figure 22 est une vue en élévation longitudinale d'un dispositif à genouillères et patin pourvu de galets libres destiné à permettre le centrage du plateau porteur sur le bogie, le patin étant en position haute pour supporter le plateau.

- la Figure 23 est une vue analogue à la Figure 22 mais montrant le dispositif de centrage à genouillères en position basse, le plateau porteur étant centré et reposant sur le bogie;

- la Figure 24 est une vue en élévation d'un levier de centrage du plateau porteur sur son support, à partir de sa position illustrée à la Figure 22;

- la Figure 25 est une vue partielle du levier de la Figure 24 et d'une biellette articulée sur celui-ci, cette biellette étant engagée dans une ouverture latérale du plateau porteur pour permettre son centrage;

- les Figures 26 et 27 sont des vues en élévation d'un mécanisme de verrouillage du plateau porteur sur son support par crochets pivotants, avant verrouillage sur la Figure 26 et après verrouillage sur la Figure 27;

- la Figure 28 est une vue en coupe transversale, d'un longeron du plateau suivant XXVIII-XXVIII de la Figure 20, montrant un dispositif de roulement à galets libres.

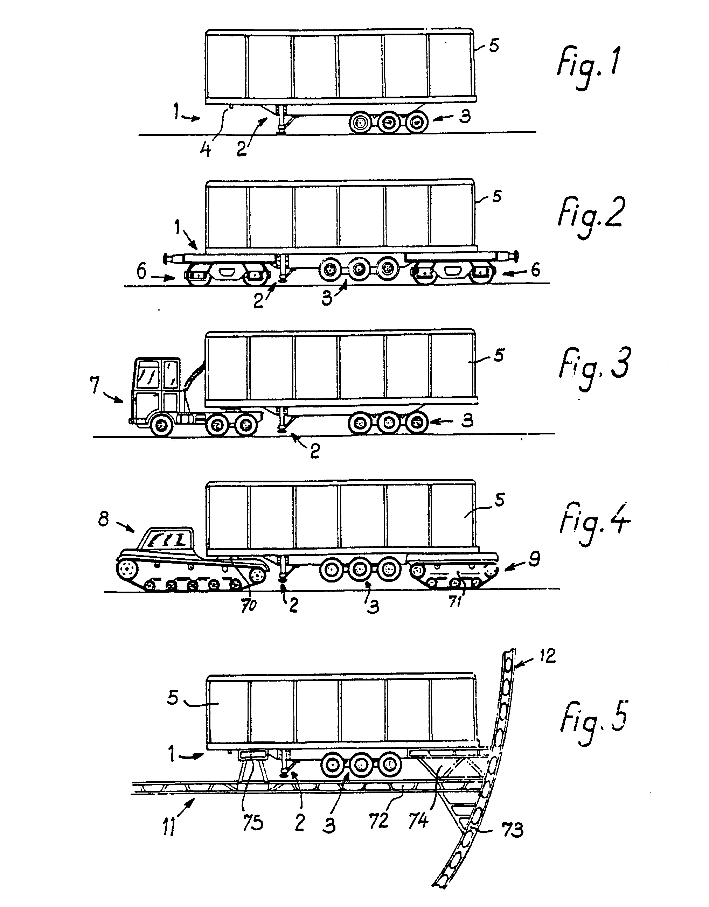

Le plateau porteur 1 schématiquement représenté à la Figure 1 est pourvu de deux béquilles hydrauliques 2 à sa partie avant, et d'un train routier 3 à trois essieux à sa partie arrière, une cheville ouvrière 4 étant prévue au voisinage de son extrémité avant pour permettre son attelage à un tracteur, ce plateau porteur 1 supportant un fourgon 5.

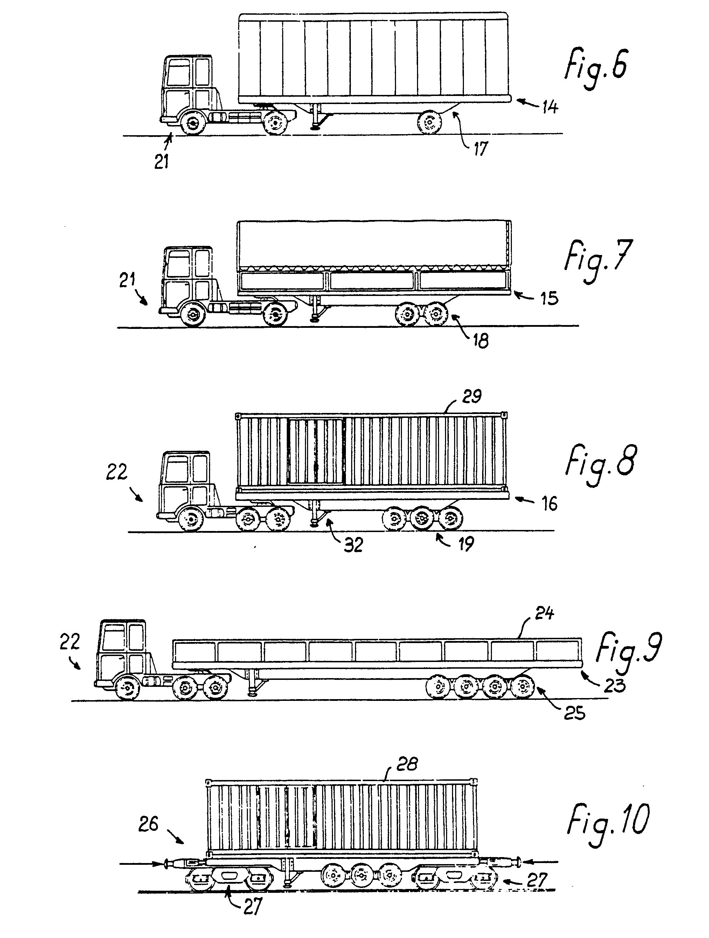

A la Figure 2, le plateau porteur 1 est monté sur deux bogies ferroviaires 6, ses béquilles 2 et son train routier 3 étant escamotés. A la Figure 3, le plateau porteur 1, qui sera appelé ci-après par commodité simplement "plateau", est attelé, par sa cheville ouvrière 4, à un tracteur routier 7, son train routier 3 étant abaissé et ses béquilles 2 étant relevées. A la Figure 4, le plateau et son fourgon 5 sont montés sur un tracteur routier à chenilles 8 qui reçoit la chenille ouvrière 4, et sur un bogie routier à chenilles 9 recevant la partie arrière du plateau 1, dont les béquilles 2 et le train 3 sont relevés.

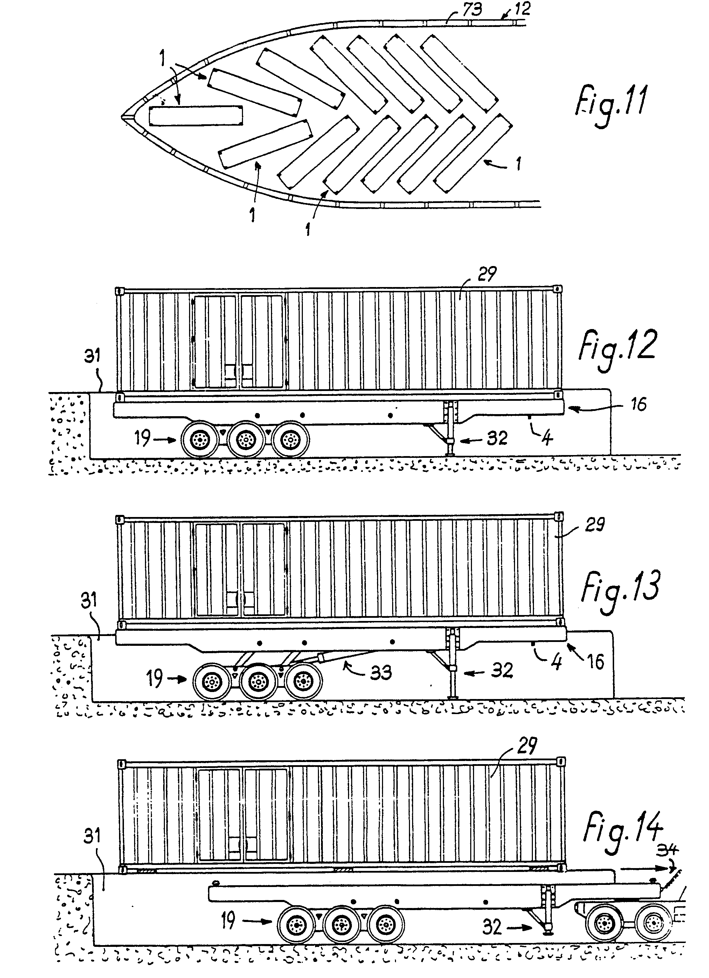

A la Figure 5, le plateau 1 et son fourgon 5 sont montés sur une structure de support 11 d'un bateau 12, avec, le train 3 et les béquilles 2 relevées. Cette structure comprend le pont 72 du bateau dont on voit la coque 73, l'ensemble étant placé de telle façon que l'arrière du plateau 1 puisse s'arrimer sur des assises périphériques fixes 74 et ensuite, après retrait du tracteur routier ayant amené le plateau 1, sur un chevalet 75 escamotable. Les assises fixes 74 et le chevalet 75 sont installés pour permettre le placement d'un maximum de plateaux porteurs dans le navire, par exemple en les disposant en épi comme illustré à la Figure 11. Cette disposition facilite le retrait alternatif de tous les convois sans perte de temps.

Les Figures 6 à 9 montrent des plateaux 14, 15, 16, respectivement à un essieu 17, deux essieux 18 et trois essieux 19 (tridem), attelés à des tracteurs routiers 21, 22, le tracteur 21 ayant un seul essieu arrière et le tracteur 22 ayant deux essieux arrière. La Figure 9 montre un plateau porteur 23 sur lequel est disposée une charge 24 et qui comporte quatre essieux 25, ce plateau étant attelé à un tracteur routier 22. Ces diverses configurations permettent de respecter les règlements de la circulation routière selon le poids total roulant.

La Figure 10 montre un plateau 26 monté sur des bogies 27 de chemin de fer et sur lequel est disposé un conteneur 28, par exemple de 40 pieds aux normes ISO. Le plateau 26 se trouve entre les tampons afin de supporter dans son axe de résistance les efforts ferroviaires de compression.

La Figure 12 montre un plateau porteur 16 "tridem", c-est-à-dire dont le train routier 19 comporte trois essieux, un conteneur 29 identique à celui de la Figure 8), étant disposé sur ce plateau, prêt à être mis à quai 31, le plateau 16 reposant sur son train 19 et sur ses deux béquilles hydrauliques 32.

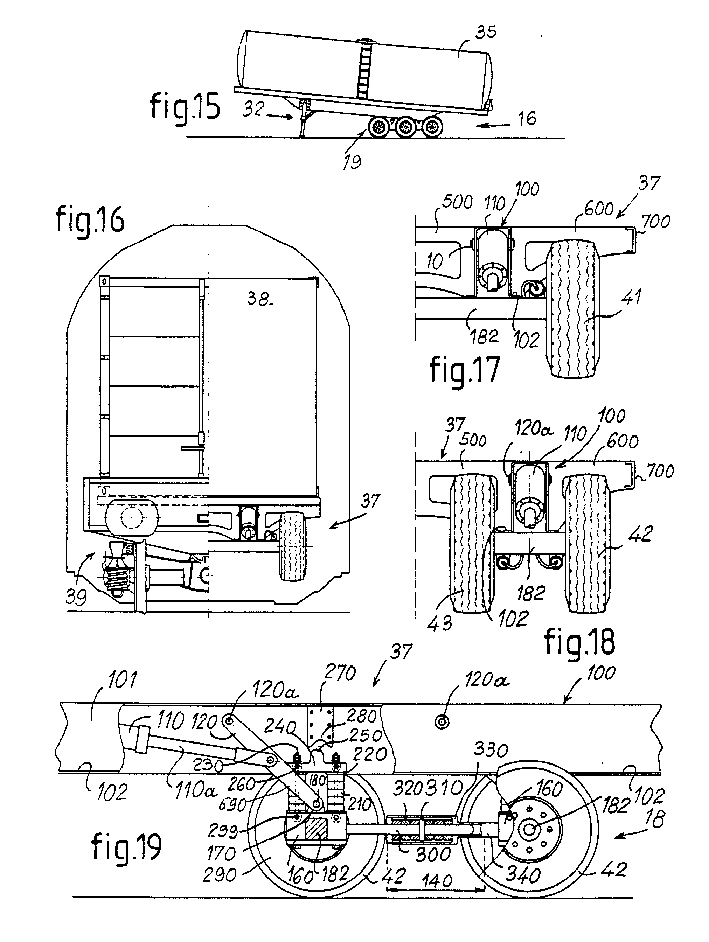

A la Figure 13, le plateau 16 a été élevé au moyen d'un mécanisme hydraulique comportant deux vérins latéraux 33 articulés, d'une part sur le châssis du plateau et d'autre part sur le train routier 19, et par actionnement des béquilles 32. Le conteneur 29 est alors évacué du plateau 16 par des moyens non représentés, pour être déposé en quai 31, puis le plateau 16 est abaissé par actionnement en sens inverse des dispositifs hydrauliques 32, 33, et attelé par sa cheville ouvrière 4 à un tracteur routier 34 (Figure 14) pour être évacué, après relèvement des béquilles 32.

A la Figure 15, le plateau 16 supporte une citerne 35, et repose sur son train routier 19 ainsi que sur ses béquilles 32, ces dernières étant suffisamment sorties pour incliner vers l'arrière le plateau 16 et la citerne 35, afin de permettre la vidange de cette dernière.

La Figure 16 montre un plateau 37 supportant un conteneur 38 et monté sur un bogie ferroviaire 39, le conteneur 38 étant aux normes ISO et s'inscrivant parfaitement dans le gabarit passe-partout UIC.

La Figure 17 montre l'emplacement des roues 41 pour un plateau 37 dont le train routier comporte un, deux ou trois essieux, tandis que la Figure 18 montre l'emplacement des roues 42, 43, lorsque le train routier, en raison du poids total roulant, doit être équipé de demi-essieux.

On décrira maintenant, en reference aux Figures 17 à 28, un mode d'exécution du plateau porteur visé par l'invention dans le cas où ce plateau est monté sur des bogies ferroviaires, sur lesquels sont prévus des dispositifs de centrage du plateau permettant son adaptation aux bogies, ces dispositifs de centrage faisant également partie de l'invention.

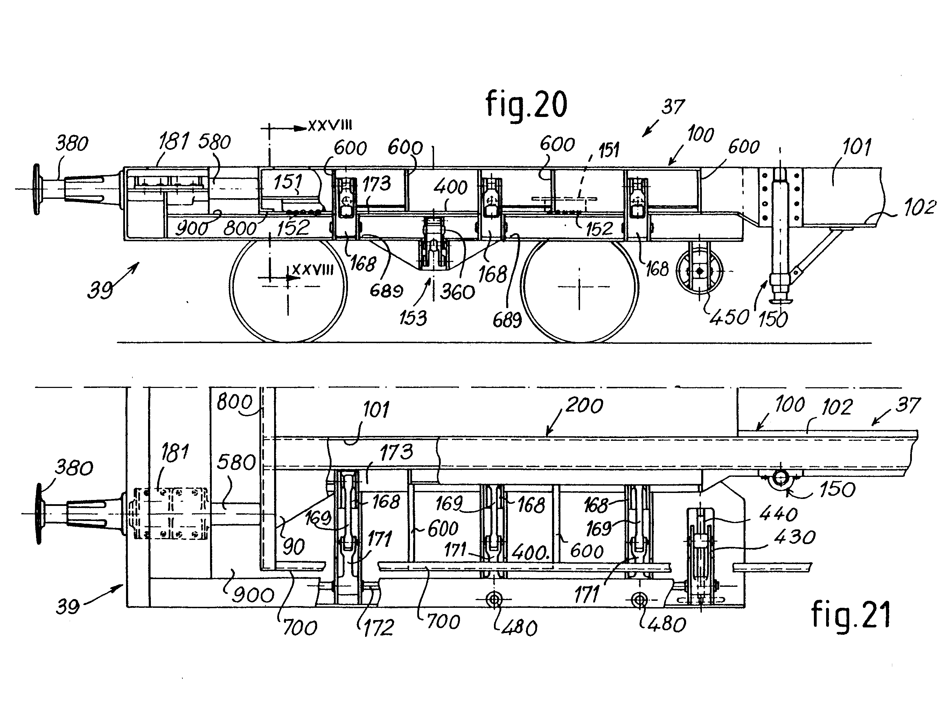

Le plateau 37 comprend une ossature principale formée par deux longerons parallèles 100, profilés chacun en U renversé avec deux branches verticales 101 prolongées entre les extrémités 200 de ces longerons 100 reposant en appui sur les bogies 39, par des ailes latérales horizontales 102 (Figures 17, 18, 20, 21), les branches verticales 101 étant reliées par une branche supérieure horizontale 103, de sorte que chaque longeron 100 présente ainsi un profil du genre oméga entre ses extrémités 200. Ces dernières peuvent venir prendre appui sur le bogie 39 par l'intermédiaire d'une platine inférieure 400 (Figures 19, 20, 21, 22, 23). L'ossature du plateau 37 comprend également entre les extrémités 200, des traverses 500 reliant les longerons 100, et des équerres 600 à l'extrémités desquelles sont reportées des rives latérales 700 formant les bords longitudinaux du plateau 37, et des traverses frontales résistantes 800 qui prennent appui en bout des longerons 100 et des rives latérales 700. Les traverses frontales 800 subissent directement les efforts élevés de compression pendant la circulation ferroviaire, et sont renforcées par le bord de la platine 400 de chaque côté des longerons 100, par des goussets 90 (Figure 21). Cette ossature peut être réalisée avantageusement en acier allié, toutes les pièces constitutives du plateau 37 étant dimentionnées et positionnées en tenant compte du choix de l'acier allié pour pouvoir résister avec un minimum de poids aux 200 tonnes en effort de compression exigés par les normes ferroviaires.

A l'extrémité avant 200 du plateau 37 et à la jonction des ailes 102, sont fixées deux béquilles hydrauliques 150 (figure 20) connues en soi mais dont la puissance et la course sont définies pour l'utilisation prévue. La cheville "ouvrière" est fixée à la partie inférieure de la platine 400 à l'endroit convenable pour permettre d'atteler le plateau 37 à un tracteur routier quelconque.

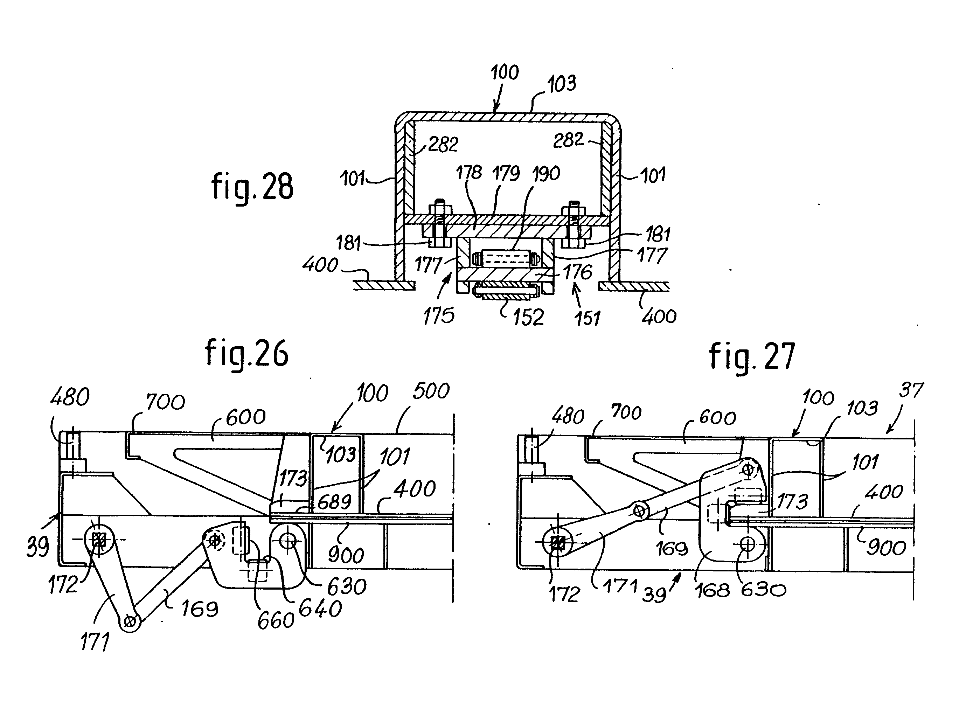

Le plateau 37 comporte des dispositifs de roulement 151 (Figures 20 et 28) à galets libres 152, 190 (Figures 20 et 28) qui peuvent prendre appui sur le bogie 39 dans l'exemple décrit, mais également sur des bogies routiers à chenilles ou sur le chevalet 75 place sur le pont 72 d'un bateau 12 (Figure 5). Deux dispositifs de roulement 151 sont ainsi prévus à chaque extrémité (200) d'un longeron 100 pour assurer l'appui du plateau 37 sur son support.

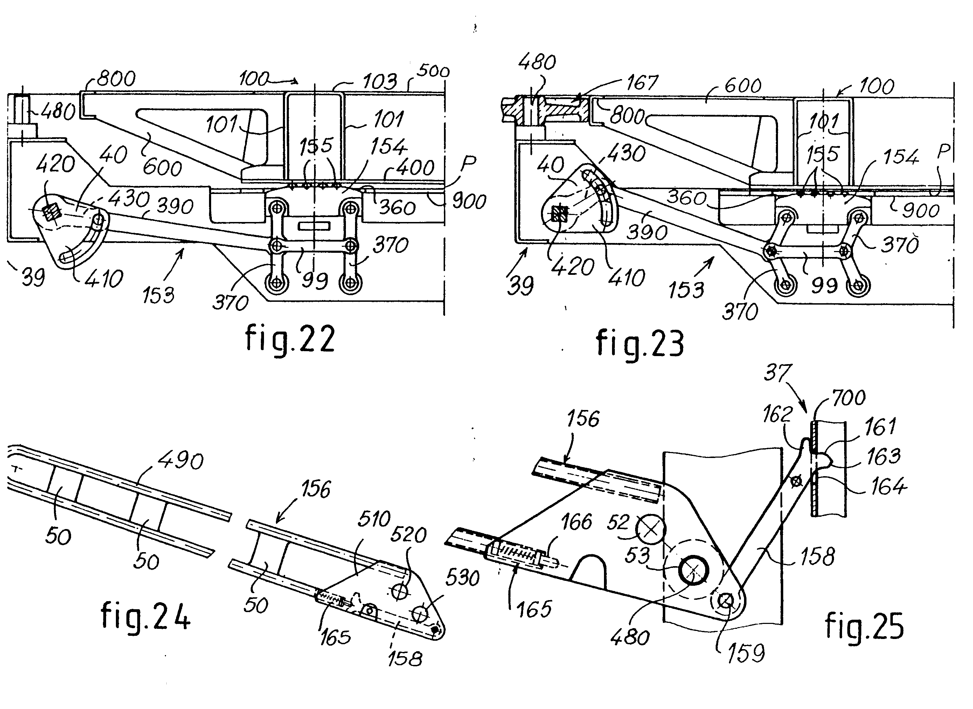

L'invention prévoit également des moyens de centrage du plateau 37 sur son support 39 afin de l'y placer coaxialement à ce dernier. Ces moyens comprennent dans la réalisation décrite, des mécanismes à genouillères 153 montés sur le bogie 39 (Figures 22, 23) et pourvus de patins 154 équipés de galets libres 155 sur leur face supérieure. Les patins 154 sont mobiles verticalement de façon que le plan de roulement des galets 155 puisse être sensiblement surélevé par rapport au plan horizontal P du bogie 39, afin que le plateau 37 puisse prendre appui sur l'ensemble des galets 155 et être centré par un système de levier 156, capable de déplacer le plateau 37 sur les galets 155 placés ainsi en position haute,

Le système de levier comprend un levier manuel 156 pouvant être articulé sur un pivot 480 (Figure 25) fixé sur un côté du bogie 39, latéralement au plateau 37, et une biellette 158 elle-même articulée en 159 sur une extrémité du levier 156 au voisinage du pivot 157. La biellette 158 présente une partie terminale dans laquelle est formée une encoche 161 bordée par deux doigts 162, 163, le doigt 163 pouvant être engagé dans une lumière 164 agencée sur un côté du plateau 37, tandis que le doigt 162 prend appui sur le plateau 37 extérieurement à l'ouverture 164. Enfin, le levier 156 comporte un verrou 165 pourvu d'un ergot 166 sollicité par un ressort, cet ergot pouvant venir s'encliqueter dans l'encoche 161 lorsque la biellette 158 est rabattue à l'intérieur de la tête du levier 56, échancrée à cet effet, afin de retenir en place la biellette 158 (Figure 24). Dans ces conditions, le plateau 37 peut être déplacé sur les galets 155 des patins 154 lorsque les mécanismes 153 sont en position haute (Figure 22), par actionnement du levier 156. Ce dernier peut en effet exercer sur le plateau 37 une poussée par l'intermédiaire de la biellette 158, par exemple à partir de la position de la Figure 22, dans laquelle le plateau 37 est écarté latéralement d'un butoir 167 fixé au bogie 39, jusqu'à la position de la Figure 23 où le plateau 37 a été amené en butée contre le butoir d'arrêt 167, après avoir été déplacé au moyen du levier 156.

Le bogie 39 est par ailleurs muni de crochets 168 pivotants de verrouillage du plateau 37, susceptibles d'être manoeuvrés par des biellettes articulées 169, 171 (Figures 20, 21, 26, 27). Les biellettes 171 sont articulées sur des axes horizontaux 172, ces dispositifs pouvant être actionnés par des moyens hydrauliques non représentés pour faire passer les crochets 168 de leur position basse (Figure 26) à leur position de verrouillage (Figure 27) dans laquelle ils sont rabattus sur des garnitures 173 fixées aux traverses du plateau 37, latéralement aux longerons 100. Le rabattement des crochets 168 sur les garnitures 173 laisse toutefois au plateau 37 une possibilité de glissement en translation axiale, comme on l'expliquera plus loin en détail.

En se reportant maintenant aux Figures 20 et 28, on voit que chacun des dispositifs de roulement 151 est logé à une extrémité 200 et à l'intérieur d'un longeron 100, et comprend un "rouleur" 175 à galets libres 152, 190. Le rouleur 175, connu en soi, est essentiellement constitué d'une plaque 176 entourée par des rouleaux supérieurs 190 et inférieurs 152 maintenus par deux parois latérales 177 fixées à une embase 178 elle-même solidarisée avec une platine 179 fixée aux parois 101 perpendiculairement à celle-ci, par exemple par soudage. Des boulons 181 traversant l'embase 178 et la platine 179 fixent à cette dernière le rouleur 175, et des cales d'appui 282 fixées aux branches 101 sont interposées entre la platine 179 et la branche horizontale 103.

Le rouleur 175 et les cales 282 sont dimensionnés de façon que les galets inférieurs 152 soient positionnés verticalement en faisant légèrement saillie en-dessous du plan horizontal défini par la face inférieure de la platine 400 (Figure 28). De ce fait, lorsque le plateau 37 est disposé sur deux bogies 39, il prend appui sur ceux-ci par les galets 152 et peut reculer sous l'effet d'un choc transmis par les tampons 380 et amortisseurs 181 (Figures 20, 21), grâce également à la possibilité laissée au plateau 37 de glisser en translation malgré la fermeture des crochets 168.

Le plateau 37 est par ailleurs muni d'essieux 182 (Figures 17-19) pourvus chacun d'une suspension munie à sa partie supérieure d'une chape 240 présentant un bossage 250 adapté pour pouvoir s'introduire dans une cuvette correspondante 280 formée dans un socle 270 fixé interieurement aux longerons associés 101, le train routier comportant les essieux 182 étant alors en position haute escamotée. Les essieux 182 peuvent être placés soit dans cette position haute, soit dans en position basse (Figure 19) par un vérin hydraulique 110 dont la tige 110a est articulée sur une bielle 120, elle-même articulée d'une part sur le longeron 100 et d'autre part sur un axe 180 d'une chape inférieure 290 solidaire d'un carter 160 auquel est fixé l'essieu 182. Le vérin hydraulique 110, sa tige 110a et la bielle 120 sont disposés intérieurement au longeron 100 (Figures 17, 18, 19), et entre ses extrémités 200, et peuvent actionner le train routier 18 à deux essieux 182 dans cet exemple. La suspension de chaque essieu 182 est formée par des empilements de bagues 210 réalisées en une matière élastique telle qu'un élastomère, interposés entre la chape supérieure 240 et la chape inférieure 290. Les bielles 120 sont articulées sur des axes 120a traversant les longerons 100, et assurent les déplacements verticaux des essieux 182 et de leurs roues 42, 43, dont les mouvements sont synchronisés par des bras de liaison 140. Les vérins 110 et les vérins des béquilles 150 sont alimentés en énergie hydraulique par une pompe hydropneumatique connue en soi, mais qui a l'avantage d'utiliser comme source motrice l'air comprimé que l'on trouve sur les tracteurs routiers et les convois ferroviaires.

Cependant dans les cas où il existe, fixée au plateau, une pompe de transfert motorisée, le moteur de ladite pompe, grâce à un embrayage double, servira à la fois au transfert de la marchandise et aux manoeuvres d'autoadaptation du plateau-porteur au mode d'acheminement choisi.

A la suite de l'une ou l'autre pompe fournissant l'énergie hydraulique, est situé un robinetvanne à combinaisons permettant soit le fonctionnement isolé des vérins 110, soit le fonctionnement isolé des béquilles 150, soit le fonctionnement syncrhonisé des verins 110 et des béquilles 150.

Ceci permet de poser alternativement les extrémités du plateau sur les bogies avant ou arrière, ou d'incliner le plateau pour assurer ou parfaire la vidange d'une citerne (Figure 15) et en associant les deux mouvements vérin 110 plus béquille 150, de le transformer en plateau élévateur pour permettre de passer sur les deux bogies sans donner d'inclinaison au chargement. On peut aussi, ce qui représente un avantage considérable propre à l'invention, prendre ou déposer en quai ou sous portique des conteneurs, caisses mobiles ou chargements unifiés (Figures 12, 13 et 14).

L'essieu complet (Figure 19) est réalisé de façon à constituer un élément indépendant mais associable en nombre afin de pouvoir modifier facilement le train routier pour respecter les règlements de la circulation routière selon le poids total roulant. Cette adaptation apparait nettement sur les Figure 6:1 essieu, Figure 7:2 essieux, Figure 8:3 essieux ou tridem, Figures 9:4 demi-essieux.

De part et d'autre de la chape 290 (Figure 19) portant l'axe 182 sont fixées des tiges avec filetage 690 articulées à leur base grâce à des tourillons 299 et sur lesdites tiges sont enfilées les bagues 210 donnant l'élasticité à la suspension. Les bagues 210 sont très légèrement comprimées par des rondelles de pression 220. Ensuite et avant fixation définitive par les écrous et contre-écrous 230, viennent prendre appui, sur les deux rondelles 220 à la fois et dans le sens de la longueur des longerons 100, les chapes 240 à bossages 250 et à tourillons 299 dans lesquels passent les tiges 690.

Sur les parois internes des longerons 100 sont disposés les socles d'appui 270 laissant entre eux un espace suffisant pour les débattements de la bielle 120 et portant en leur partie inférieure les cuvettes 280.

En imaginant la fin du mouvement vers l'arrière provoqué par l'action du vérin 110 sur la bielle 120, on remarque qu'il se produit un mouvement d'ascension de la roue 42, que le bossage 250 de la chape 240 vient se loger dans la cuvette 280, provoquant à ce moment la mise en action de la suspension constituée par les bagues 210. Les tiges 690 pouvant coulisser dans les bagues 210, les rondelles 220 et les tourillons, 260 des chapes 240, l'élasticité des bagues 210 peut être sollicitée librement: les parties supérieures des tiges 690 devenant libres, trouvent alors passage de part et d'autre des socles 270, le tout conservant une certaine possibilité d'oscillation longitudinale grâce aux tourillons 299 et 260. Au repos la légère compression pré-établie des bagues au montage ramène tout l'ensemble dans une parfaite position verticale.

Si le mouvement de la bielle 120 avait eu lieu vers l'avant, l'ensemble des éléments précités de la suspension ne trouvant pas le socle d'appui 270, tout le mécanisme remonterait plus haut et à l'intérieur des longerons 100 entraînant les essieux 182 au contact des longerons 100 (Figure 17) pour un essieu traversant (Figure 18) pour un demi-essieu, provoquant ainsi l'escamotage des roues pour la circulation ferroviaire (Figure 2) en tous terrains (Figure 4) et par mer (Figure 5).

A ce moment et lorsque tout l'ensemble train routier, roues et mécanismes sont remontés, il est possible de verrouiller l'ensemble en position haute par l'intermédiaire des tiges de petits vérins hydrauliques, évitant ainsi toute retombée intempestive d'un élément quelconque pendant les modes de circulation représentés en Figures 4 et 5 et principalement en circulation ferroviaire (Figure 2).

Le bras 140 tout en synchronisant le mouvement des essieux 182 confère à cette liaison une certaine élasticité afin d'augmenter la souplesse de la suspension lorsqu'il y a plusieurs essieux successifs et particulièrement pour le passage de dénivellations ou petits obstacles, et en route normale il sert également d'élément anti-galop.

Ces résultats sont obtenus grâce à un élément compensateur de débattement à double effet.

Le bras 140 (Figure 19) est composé d'une tige 300 fixée aux carters 160 et dont est rendu solidaire un disque d'appui 310. De part et d'autré de ce disque 310 sont juxtaposés des anneaux en élastomère 320 et l'ensemble anneaux 320 disque 310 anneaux 320 est emprisonné dans un boîtier cylindrique 330 solidaire d'une tige partiellement creuse 340 fixée au carter 160 de l'essieu routier suivant. La tige 300 coulisse librement dans le boîtier 330 à l'intérieur de la partie creuse de la tige 340.

Lors du passage d'une dénivellation ou d'un petit obstacle la secousse est subie successivement et non simultanément par les roues du train routier 18, les suspensions réagissent également successivement, provoquant des différences de débattements, donc des variations d'entraxes qui se trouvent absorbées et restituées par l'élément compensateur de débattements décrit ci-dessus.

Le plateau 37 ainsi complétement équipé peut s'autoadapter à différents modes d'acheminement (Figures 2, 3, 4 et 5).

Pour la circulation routière (Figure 3) l'adaptation est rigoureusement identique à celle semi-remorque classique.

Pour l'adaptation à la circulation ferroviaire, on utilise deux bogies dotés de plateformes spécialement conçues et équipées mais absolument identiques: On évite ainsi d'avoir à prendre des précautions pour la présentation du convoi routier sur l'aire d'une voie enterrée nécessaire à la manoeuvre de transfert rail-route.

Les plateaux des bogies 39 possèdent une plaque d'assise 900 suffisamment basse pour permettre l'alignement, dans le plan vertical, de l'axe des tampons 380 avec l'axe de résistance du plateau 37 lorsque celui-ci est en place sur les bogies 39 (Figure 10).

Si cet alignement dans le plan vertical s'effectue par simple gravité, l'alignement dans le sens longitudinal, impératif pour permettre la mise en place de tous les dispositifs d'accrochage de liaison et de sécurité, risque d'être d'autant plus difficile qu'il dépend de l'habileté de conduite du chauffeur routier et que, par surcroit, le poids total du plateau porteur avec chargement risque d'être très élevé.

Grâce au dispositif réalisé selon l'invention à partir des patins 154 à galets libres 155, cette mise en alignement se fera aisément.

Sur les plaques d'assise 900, il est prévu du côté opposé aux tampons 380, une ouverture permettant le libre passage longitudinal de la cheville ouvrière 4 pour traction routière jusqu'à l'aplomb de l'axe du bogie 39, et suffisamment large pour permettre un mauvais alignement de plateau 37 et des bogies 39 d'environ 15 cm de part et d'autre afin que ladite cheville ouvrière 4 ne soit pas endommagée.

De chaque côté de cette ouverture et à l'aplomb de l'axe transversal des bogies 39 sont prévus des lumières avec guides latéraux 360 (Figures 22 et 23) dans lesquels les patins 154 à galets 155 peuvent monter et descendre. Le déplacement vertical est obtenu par des leviers 370 formant deux genouillères du mécanisme 153 dont les mouvements sont synchronisés par une petite bielle 99 sur laquelle vient agir l'extrémité d'un bras d'une autre genouillère constituée par les bielles 390 et 40.

La bielle 40 est mise en mouvement par un secteur 410 qui permet grâce à une lumière prévue à cet effet une certaine liberté conditionnée de la bielle 40. Le secteur 410 est commandé dans sa rotation partielle par un arbre carré 420 qui tourne sous l'action de bras à écrous coulissants 430 dont les débattements angulaires sont provoqués par la rotation d'une vis à effet différentiel 440 entraînée dans un sens ou dans l'autre par le volant 450.

Le dispositif pour l'alignement étant mis en position d'utilisation avant d'entrer en action, la manoeuvre de mise en place n'exige donc aucun effort.

Cependant grâce à sa conception qui associe la grande résistance d'articulations à genouillères avec leur possibilité de verrouillage et des patins à galets libres, il est possible d'aligner parfaitement avec les bogies des convois d'un poids total allant jusqu'à 80 tonnes. En effet, chaque patin 154 à galets 155 a une capacité unitaire de 20 tonnes et il y en a deux par bogie.

Pour exécuter la manoeuvre d'alignement avec un maximum de précision et un minimum d'efforts l'invention prévoit des accessoires complémentaires spéciaux mais simples et légers pouvant être attachés sur les plateformes des bogies pendant l'acheminement: des galets de positionnement 167 (Figure 23) complétés par leurs axes 480 et le levier 156 qui sert également pour parfaire la mise en place des dispositifs d'accouplement-traction avec un minimum d'effort grâce aux dispositifs 151 à galets 152.

Le levier 156 est assez long pour diminuer l'effort à exercer mais très maniable: son corps est constitué par un tube 490 de diamètre choisi pour bien tenir en mains. Les deux branches du tube sont reliées par des platines 50 suffisamment espacées pour permettre l'action de plusieurs personnes. La tête réalisée en forme de chape est constituée par deux platines 510 possédant deux alésages 520 et 530 venant se loger sur les axes-pivots 480 (Figure 25), permettant ainsi de choisir entre deux forces d'actionnement.

Grâce à ce levier 156 et aux galets de positionnement 167, l'alignement des trois éléments du convoi ferroviaire bogie 39-plateau 37-bogie 39 s'effectue de la façon suivante.

Lorsque le plateau a pris appui sur les galets 155 des patins de centrage 154 il n'est pas, dans la majorité des cas, parfaitement aligné: il se trouve donc déporté d'un côté quelconque. Du côté où il existe le plus grand déport un ou deux galets de positionnement 167 sont placés sur les axes-pivots 480.

Du côté opposé un ou deux leviers 156 sont mis en place sur les axes-pivots 480 par l'intermédiaire de leur alésage 520; il suffit alors de tirer ou pousser sur le levier qui, en faisant pression sur la rive 700 déplace le plateau jusqu'à ce que l'autre rive 700 prenne contact avec le ou les galets de positionnement 167 installés sur le côté opposé. Le rayon des galets 167 est déterminé pour assurer le parfait alignement de l'axe du bogie 39 avec l'axe du plateau 37 lorsqu'une rive 700 vient en contact avec le galet 167. Lorsque le levier 156 est en place sur les axes-pivots 480, il se situe alors à hauteur de poitrine d'un homme permettant ainsi une bonne efficacité.

Lorsque le parfait alignement est obtenu, une action limitée sur le volant 450 provoque par l,action en chaine des éléments 440, 430, 420, 410, 40, 390, 480 et 370 l'effacement des patins 154 dans leurs logements 360. Même si cet effacement se produit quelque peu brutalement sous la pression du chargement, cela ne peut engendrer aucun dommage, l'affaissement étant très limité.

Les extrémités 200 des longerons 100 reposent alors sur la plaque d'assise 900 par l'intermédiaire de quatre dispositifs 151 à galets libres 152 qui vont, combinés avec les dispositifs d'accrochage selon l'invention, donner à l'ensemble bogie-plateau la faculté d'absorber une grande partie des chocs sans répercussion sur le chargement: cette propriété augmente considérablement les possibilités du transport ferroviaire en permettant notamment d'inclure dans les trafics diffus et triages à la butte un grand nombre de chargements fragiles, ce qui s'avérait impossible jusqu'à maintenant.

Avant d'expliquer les dispositifs et leur fonctionnement, le plateau porteur 37 va être amené à sa position définitive pour la mise en place des dispositifs d'accouplement traction et sécurité nécesaires pour la circulation ferroviaire.

Sans enlever les galets de positionnement 167 qui se trouvent sur les axes-pivots 480, le levier 156, dont la biellette a été sortie de son logement, est placé par son alésage 530 sur un axe-pivot 480 du côté opposé aux galets de positionnement et le bec de la biellette 158 est engagé dans l'une des lumières 164 faites au milieu des rives 700. Un effort convenablement dirigé sur le corps du levier va, grâce aux articulations 530 et 550, faire avancer le plateau 37 vers l'avant des bogies (côté tampons). Cette manoeuvre s'arrête au moment précis où la traverse frontale 800 prend contact avec le piston de l'absorbeur de chocs 580.

On va maintenant décrire plus en détail les crochets de traction des Figures 26 et 27 ainsi que leur mise en place et mode d'action.

Pour assurer la liaison mécanique entre bogies et plateau avec la résistance et la sécurité nécessaires à la circulation ferroviaire, il est mis au point, dans le mode de réalisation décrit, un accouplement à l'aide des puissants crochets 168 qui par leur nombre et leurs actions synchronisées offrent un maximum de garanties. Ces crochets 168 relativement épais en acier coulé ou forgé, sont mis en position de travail par l'action de genouillères constituées par les bielles 169, 171 qui les font pivoter sur leur axe 630. Ces mouvements sont commandés par l'arbre carré 172. Lorsque les crochets 168 ont pris leur position verticale (Figure 27), ils s'y trouvent verrouillés par les genouillères 169, 171 qui ont alors atteint leur position de force rectiligne. Le corps épais des crochets possède deux gros galets 640 et 660: le galet 640 devenu vertical va maintenant éviter tout déport latéral par le guidage qu'il effectue sur le bord longitudinal 650 de la plaque inférieure 400 du plateau, le galet 660 devenu horizontal va prendre appui sur le chemin de roulement 173 rapporté sur les bords latéraux 689 de la plaque ou platine 400, assurant la liaison verticale des différents plateaux et bogies, tout en permettant un débattement longitudinal en translation rendu souple par les quatre dispositifs de roulement 151 à galets libres 152 dont la force unitaire est de 20 tonnes.

En prenant la position verticale, le corps épais des crochets 158 vient se situer derrière les très fortes équerres 600 (Figures 26-27) solidement fixés aux côtés extérieurs des longerons 100, ce qui permet d'assurer tous les efforts de traction que requiert la circulation ferroviaire. Mais pour que les axes d'articulation 630 ne souffrent pas de ces efforts, la forme extérieure des corps des crochets est dessinée pour qu'ils prennent essentiellement appui sur les parois solides de guides lateraux 690 (Figure 20). Il sera alors possible de donner un certain jeu à l'articulation 630.

En examinant attentivement les Figures 20, 21, 26 et 27, on constate la très grande solidité et fiabilité de la liaison plateau porteur-plateforme de bogie. Pour que la désolidarisation se produise, il faudrait provoquer l'éclatement des six crochets 168 en acier massif ou le déverrouillage simultané des six fortes genouillères 153 simultanément: c-est pratiquement impossible.

On va maintenant examiner comment la présente réalisation choisie à titre d'exemple, se comporte pour permettre l'absorption des chocs que peut engendrer toute la circulation ferroviaire: trafic diffus ou triage à la butte.

Au moment du choc, il se produit une première absorption des effets par les tampons 380 de chocs à haute performance spécialement choisis, puis si cette dernière absorption n'est pas suffisante, le plateau 37 glisse sur ses dispositifs porteurs 151 et sous les galets 660 des crochets 168, qui possèdent pour ce faire un débattement suffisant entre les équerres de traction 600 et les équerres de châssis 600. Pendant cette translation, l'avant du plateau 37, par l'intermédiaire de sa traverse de tête 800, comprime deux amortisseurs de chocs 580 à l'arrière, des tampons 380 et dans le même axe. Ainsi les efforts de chocs, à l'exception de ceux d'une très grande violence, sont totalement absorbés par ce cumul d'éléments amortisseurs sans que le chargement puisse en souffrir, après quoi les amortisseurs 580 et les tampons 380 reprennent leur configuration initiale, et les crochets 168 reprennent leur appui latéral sur les équerres de traction 600.

Pour les dispositifs de sécurité, il a déjà été mentionné que les conduites de freinage se raccordent à l'aide d'accouplements rapides aux liaisons entre extrémités du plateau-porteur et du plateau de bogies, Toutefois et par mesure de sécurité complémentaire les leviers de manoeuvre 430 agissent en fin de course de verrouillage sur un robinet à pédale qui provoque le freinage du convoi tant que les crochets et genouillères ne sont pas à leur place définitive.

Pour permettre au plateau-porteur de circuler en tous terrains (Figure 4), il s'adaptera à l'avant à un tracteur 8 à chenilles dont le sellette 70 aura été équipée d'un solide système d'articulations à cardans permettant les oscillations en tous sens et à l'arrière à un bogie à chenilles 9 ayant en partie supérieure un berceau comportant les mêmes dispositifs d'accouplement que pour la circulation ferroviaire.

## Revendications

1 - Plateau porteur destiné à recevoir un fourgon ou conteneur de marchandises, comportant des moyens d'autoadaptation, soit à des bogies (39) de chemin de fer, soit à un bogie routier à chenilles (9), soit à une structure de support (72, 74, 75) dans un bateau (12) pour le transport du fourgon par chemin de fer, par ossature comportant deux longerons parallèles (100) reliés par des traverses (500), ainsi qu'un train routier escamotable (17, 18, 19) caractérisé en ce que les longerons (100) sont profilés chacun en u renversé dont les branches (101) sont prolongées sauf à leurs extrémités par des ailes latérales (102), chaque longeron présentant ainsi dans sa partie pourvue d'ailes un profil du genre oméga, les traverses (500) reliant les longerons (100) dans leurs zones pourvues d'ailes (102) tandis que leurs parties terminales, extérieures aux ailes (102) sont assemblées par des platines (400) d'appui sur des supports adaptables de façon connue en soi à des bogies ferroviaires (39), et en ce que le plateau est équipé de dispositifs de roulement (151) à galets libres (152, 190) logés dans les extrémités et à l'intérieur des longerons (100), ainsi que de béquilles hydrauliques (32, 150) à course suffisante pour élever le plateau porteur (1, 37), les dispositifs de rouiement (151) à galets (152) pouvant prendre appui, soit sur des bogies de chemin de fer (39), soit sur des bogies routiers à chenilles (9), soit sur une structure de support (72, 74, 75) dans un bateau, ledit plateau porteur étant en outre pourvu de vérins hydrauliques (33) qui en combinaison avec les béquilles hydrauliques (32) permettent la mise à qual ou l'enlèvement de conteneurs.

2 - Plateau porteur selon la revendication 1, caractérisé en ce qu'il est pourvu de moyens de centrage sur son support (39), c'est-à-dire sur des bogies (39) ou sur une structure de bateau, afin de le dispoer coaxialement audit support.

3 - Plateau porteur selon la revendication 2, caractérisé en ce que lesdits moyens de centrage comprennent des mécanismes à genouillère (153) montés sur le support (39) du plateau (37) et pourvus de patins (154) équipés de galets libres (155) sur leur face supérieure. ces patins (154) étant mobiles verticalement de façon que le plan de roulement des galets (155) puisse être sensiblement surélevé par rapport au plan horizontal (P) du support (39) du plateau (37), afin que ce dernier puisse prendre appui sur l'ensemble des galets (155) et être centre par au moins un levier (156) capable de déplacer le plateau (37) sur les galets (155) ainsi placés en position haute.

4 - Plateau porteur selon la revendication 3, caractérisé en ce que le levier manuel (156) peut être articulé sur un pivot (480) fixé au support (39) du plateau (37) latéralement à ce dernier, et comporte une biellette (158) elle-même articulée sur une extrémité du levier (156), et cette biellette présente un bec terminal adapté pour être engagé dans une lurmière (164) agencée sur une rive (700) du plateau (37) afin que ce dernier puisse être déplacé sur les galets (155) des patins (154), et centré sur le support (39) par actionnennent du levier (156), au moins un pivot (480) étant prévu sur chaque rive (700), du support (39) et plusieurs lumières (164) de réception de la biellette (158) étant agencées sur les rives (700) du plateau (37).

5 - Plateau porteur selon l'une des revendications 1 à 4, caractérisé en ce que son support (39) est muni de butoirs latéraux (167) de positionnement du plateau (39) et de crochets (168) pivotants de maintien du plateau (37), susceptibles d'être manoeuvrés par des biellettes articulées (169, 171) pour venir s'appliquer sur des garnitures latérales (173) du plateau (37).

6 - Plateau porteur selon la revendication 1, caractérisé en ce que chacun des dispositifs de roulement (151) à galets libres (152) prévus dans les extrémités (200) et à l'intérieur des longerons (100) comprend un rouleur à galets (175) fixé à une platine (179) elle-même solidaire des parois verticales (101) du longeron (100), des cales (282) d'appui étant interposées entre la platine (179) et la branche intermédiaire horizontale (103) du longeron et fixées à ce dernier ainsi qu'à la platine (179), et le rouleur (175) comporte un ensemble de galets (152, 190) parmi lesquels des galets inférieurs (152) sont positionnés verticalement de façon à faire légèrement saillie au-dessous du plan horizontale (P) délimité par la face inférieure de la platine (400) fixée aux extrémités (200) des longerons (100).

7 - Plateau porteur selon l'une quelconque des revendication précédentes, dans lequel le train routier comprend au moins un essieu, caractérisé en de que cet essieu (182) est pourvu d'une suspension munie à sa partie supérieure d'une chape (240) présentant un bossage (250) adapté pour pouvoir s'introduire dans une cuvette correspondante (280) formée dans un socle (270) fixé intérieurement au longeron associé (100), le train routier (17, 18, 19) étant alors en position haute escamotée, et pouvant être placé soit dans cette position haute, soit en position basse par au moins deux vérins hydrauliques (110) dont les tiges (110a) sont articulées sur des bielles (120), elles-mêmes chacune articulée d'une part sur le longeron (100) et d'autre part sur l'essieu (182), le vérin (110) d'actionnement étant de préférence logé dans le longeron (100).

8 - Plateau porteur selon la revendication 7, caractérisé en ce que la suspension de l'essieu (182) est formée par des empilements de bagues (210) en une matière élastique telle qu'un élastomère, interposés entre la chape supérieure (240) et une chape inférieure (290) solidaire d'un carter (160) fixé à l'essieu (182), la bielle (120) de manoeuvre de l'essieu (182) étant articulée sur la chape inférieure (290).

9 - Plateau porteur selon l'une des revendications 7 et 8, caractérisé en ce que deux essieux successifs (182) sont reliés par un bras (140) de synchronisation anti-galop, ce bras (140) comprenant une tige (300) fixée aux carters (160) des essieux et dont est solidaire un disque (310) d'appui de part et d'autre duquel sont juxtaposés des anneaux en élastomère (320), et l'ensemble (320, 310; 320) est emprisonné dans un boîtier (330) solidaire d'une tige partiellement creuse (340) fixée au carter (160) d'un essieu, la tige (300) coulissant librement dans le boîter (330) à l'intérieur de la partie creuse de la tige (340).

**Patentansprüche**

1. Sattelflachauflieger für die Aufnahme eines Kastenaufbaus oder Frachtcontainers mit Mitteln zur Selbsteinstellung auf Eisenbahndrehgestelle (39) Raupenfahrgestelle (9) oder eine Trägerstruktur (72, 74, 75) in einen Schiff (12) zum Transport des Kastenaufbaus mit der Bahn, auf der Straße und auf See, wobei dieser Auflieger ein Gerippe mit zwei über Querträger (500) verbundenen parallelen Längsträgern (100) sowie ein einziehbares Straßenfahrwerk (17, 18, 19) umfaßt, dadurch gekennzeichnet, daß die Längsträger (100) jeweils in Form eines umgekehrten U profiliert sind, dessen Schenkel (101) außer an ihren Enden durch seitliche Flügel (102) verlängert sind womit jeder Längsträger so in seinem mit Flügeln versehenen Teil ein Profil nach Art eines Omega bildet, wobei die Querträger (500) die Längsträger (100) an ihren mit Flügeln (102) versehenen Zonenverbinden während ihre Endabschnitte, außerhalb der Flügel (102) durch Platten (400) zur Auflage auf Trägern, die in an sich bekannter Weise an Eisenbahndrehgestelle (39) anpaßbar sind, verbunden sind, und daß der Auflieger mit Laufvorrichtungen (151) mit in den Enden und in Inneren der Längsträger (100) untergebrachten freien Rollen (152, 190) sowie mit hydraulischen Stützfüßen (32, 150) mit für ein Anheben des Aufliegers (1, 37) ausreichendem Hub versehen ist, wobei die Laufvorrichtungen (151) mit Rollen (152) an Eisenbahndrehgestellen (39), Raupenfahrgestellen (9) bzw. einer Trägerstruktur (72, 74, 75) in einem Schiff zur Anlage kommen können, wobei der Auflieger ferner mit hydraulischen Winden (33) versehen ist, die in Verbindung mit den hydraulischen Stützfüßen (32) das Absetzen an der Rampe oder das Anheben von Containern gestatten.

2. Auflieger nach Anspruch 1, dadurch gekennzeichnet, daß er mit Mitteln zur Zentrierung auf seinen Träger (39), d. h. auf Drehgestelle (39) oder eine Schiffstruktur, versehen ist, um ihn koaxial zu dem Träger anzuordnen.

3. Auflieger nach Anspruch 2, dadurch gekennzeichnet, daß die Zentrierungsmittel Kniehebelmechanismen (153) umfassen, welche auf dem Träger (39) des Aufliegers (37) angebracht und mit Gleitkufen (154) versehen sind, welche auf ihrer Oberseite mit freien Rollen (155) ausgestattet sind, wobei die Gleitkufen (154) vertikal beweglich sind, so daß die Rollebene der Rollen (155) bezüglich der Horizontalebene (P) des Trägers (39) des Aufliegers (37) merklich angehoben werden kann, damit letzterer auf dem Satz von Rollen (155) zur Anlage kommen und mittels wenigstens eines Hebels (158) zentriert werden kann, welcher den Auflieger (37) auf den auf diese Weise hoch liegenden Rollen (155) verschieben kann.

4. Auflieger nach Anspruch 3, dadurch gekennzeichnet, daß der handbediente Hebel (158) an einem am Träger (39) des Aufliegers (37) seitlich des letzteren befestigten Zapfen angelenkt werden kann und einen Schwingarm (158) aufweist, welcher seinerseits an einem Ende des Hebels (158) angelenkt ist, und daß dieser Schwingarm eine Endnase aufweist, welche für ein Eingreifen in ein Langloch (184) eingerichtet ist, welches in einer Randfläche (700) des Aufliegers (37) ausgebildet ist, damit letzterer durch Betätigen des Hebels (158) auf den Rollen (155) der Kufen (154) verschoben und auf den Träger (39) zentriert werden kann, wobei wenigstens ein Zapfen (480) auf jeder Randfläche (700) des Trägers (39) vorgesehen und mehrere Langlöcher (164) zur Aufnahme des Schwingarms (158) in den Randflächen (700) des Aufliegers (37) ausgebildet sind.

5. Auflieger nach einem der Ansprüche 1 bis 4, dadurch gekennzeichnet, daß sein Träger (39) mit seitlichen Puffern (187) zur Positionierung des Aufliegers (37) und mit schwenkbaren Haken (188) zum Festhalten des Aufliegers (37), welche durch angelenkte Schwingarme (169, 171) so gesteuert werden können, daß sie sich gegen seitliche Beschläge (173) des Aufliegers (37) legen, versehen ist.

6. Auflieger nach Anspruch 1, dadurch gekennzeichnet, daß jede der in den Enden (200) und innerhalb der Längsträger (100) vorgesehenen Laufvorrichtungen (151) mit freien Rollen (152) einen Rollenheber (175) umfaßt, welcher an einer Platte (179) befestigt ist, welche ihrerseits mit vertikalen Wänden (101) des Längsträgers (100) fest verbunden ist, wobei Anschlagfutterstücke (282) zwischen der Platte (179) und dem horizontalen Verbindungsschenkel (103) des Längsträgers zwischengelegt und an letzterem sowie an der Platine (179) befestigt sind, und daß der Rollenheber (175) einen Satz von Rollen (152, 190) aufweist, von denen die unteren Rollen (152) in vertikaler Richtung so angeordnet sind, daß sie geringfügig nach unten über die durch die Unterseite der an den Enden (200) der Längsträger (100) befestigten Platte (400) bestimmte Horizontalebene (P) hervorspringen.

7. Auflieger nach irgendeinem der vorstehenden Ansprüche, bei welchem das Straßenfahrwerk wenigstens eine Achse aufweist, dadurch gekennzeichnet, daß diese Achse (182) mit einer Aufhängung versehen ist, welche in ihrem oberen Teil mit einer Abdeckung (240) versehen ist, welche einen Buckel (250) aufweist, welcher sich in eine entsprechende Mulde (280) legen kann, welche in einem innen am zugehörigen Längsträger (100) befestigten Sockel (270) ausgebildet ist, womit das Straßenfahrwerk (17, 18, 19) dann in eingezogener hoher Stellung ist und in dieser hohen Stellung oder in tiefer Stellung mit wengistens zwei hydraulischen Winden (110) angeordnet werden kann, deren Stangen (110a) an Zwischengliedern (120) angelenkt sind, die ihrerseits einerseits am Längsträger (100) und andererseits an der Achse (182) angelenkt sind, wobei die Betätigungswinde (110) vorzugsweise im Längsträger (100) untergebracht ist.

8. Auflieger nach Anspruch 7, dadurch gekennzeichnet, daß die Aufhängung der Achse (182) durch Stapel von Ringen (210) aus elastischem Werkstoff, wie einem Elastomer, gebildet ist, welche zwischen der oberen Abdeckung (240) und einer mit einem an der Achse (182) befestigten Gehäuse (180) fest verbundenen unteren Abdeckung (290) zwischengelegt sind, wobei das Zwischenglied (120) zur Betätigung der Achse (182) an der unteren Abdeckung (290) angelenkt ist.

9. Auflieger nach einem der Ansprüche 7 und 8, dadurch gekennzeichnet, daß zwei aufeinanderfolgende Achsen (182) durch einen Antinicksynchronisationsarm (40) miteinander verbunden sind, wobei dieser Arm (140) einen an den Gehäusen (180) der Achsen befestigten Schaft (300) umfaßt, mit welchem eine Anschlagscheibe (310) fest verbunden ist, an deren beiden Seiten Ringe aus Elastomer (320) nebeneinander liegen, und daß der Aufbau (320, 310; 320) in einem Gehäuse (330) eingeschlossen ist, welches miteinem am Gehäuse (180) der einen Achse angebrachten teilweise hohlen Schaft (340) fest verbunden ist, wobei der Schaft (300) frei im Gehäuse (330) innerhalb des hohlen Teils des Schaftes (340) gleitet.

## Claims

1. A carrying platform for receiving a goods van or container, comprising auto-adaptation means to a railway bogie (38), a tracked road bogie (9), or a support structure (72, 74, 75) in a boat (12) for transporting the van by railway, road or sea, this platform comprising a frame having two parallel longitudinally-extending side-members (100) interconnected by cross-members (500), a retractable road set of wheels (17, 18, 19), characterized in that the side-members (100) each have an inverted U-shaped cross-section the branches of which are extended except at their ends by lateral wings (102), each side-member having therefore in the region thereof provided with wings an omega type of cross-sectional shape, the cross-members (500) interconnection the side-members (100) in the regions thereof provided with wings (102) while the end parts thereof outside the wings (102) are assembled by plate structures (400) for bearing on supports adaptable in the known manner to railway bogies (39), and the plate structure is equipped with rolling devices (151) having free-running rollers (152, 190) and placed in the ends of and inside the side-members (100) and hydraulic prop structures (32 150) having sufficient propping travel to raise the carrying platform (1, 37), the rolling devices (151) having rollers (152) capable of bearing either on a railway bogie (39), or a tracked road bogie (9), or a support structure (72, 74, 75) in a boat said carrying platform being further provided with hydraulic jacks (33) which are capable, in combination with said prop structures (32), of placing containers on a loading platform or removing them from a loading platform.

2. A carrying platform according to claim 1, characterised in that it comprises means for centering it on the support (39) thereof, i.e. on a bogie (39) or a boat structure so as to dispose it coaxially with respective said support.

3. A carrying platform according to claim 2, characterised in that said centering means comprise toggle mechanisms (153) mounted on the support (39) of the platform (37) and provided with shoes (154) including free-running rollers (155) on an upper side of the shoes, these shoes (154) being vertically movable so that the rolling plane of the rollers (155) can be substantially raised relative to the horizontal plane (P) of the support (39) of the platform (37) so that the latter can bear on all the rollers (155) and be centered by at least one lever (156) capable of shifting the platform (37) on the rollers (155) thus placed in an upper position.

4. A carrying platform according to claim 3, characterized in that the manual lever (158) can be pivotally mounted on a pivot (480) fixed to the support (39) of the platform (37) laterally of the latter and comprises a link (158) itself pivotally mounted on one end of the lever (156) and this link has an end nose portion for engagement in an aperture (164) provided in an edge (700) of the platform (37) so that the latter can be displaced on the rollers (155) of the shoes (154) and centered on the support (39) by actuation of the lever (156), at least one pivot (480) being provided on each edge (700) of the support (39) and a plurality of apertures (164) for receiving the link (158) being arranged along the edges (700) of the platform (37).

5. A carrying platform according to one of the claims 1 to 4, characterised in that the support (39) thereof is provided with lateral buffers (167) for positioning the platform (39), and pivotal hooks (168) for maintaining the platform (37) capable of being shifted by articulated links (169, 171) for being applied on lateral members (173) of the platform (37).

6. A carrying platform according to claim 1, characterised in that each of the rolling devices (151) having free running rollers (152), provided in the ends (200) of and inside the side-members (100) comprises a linear rolling bearing device (175) fixed to a plate (179) which is connected to the spaced-apart vertical walls (101) of the side-member (100), supporting spacer blocks (282) being interposed between the plate (179) and the intermediate horizontal branch (103) of the side-member and fixed to the latter and to the plate (179) and the rolling bearing device comprises an assembly of rollers (152, 190) among which lower rollers (152) are vertically positioned so as to project slightly below the horizontal plane (P) defined by the lower side of the plate structure (400) fixed to the ends (200) of the side-members (100).

7. A carrying platform according to any one of the preceding claims, wherein the road set of wheels comprises at least one axle, characterized in that this axle (182) is provided with a suspension having in the upper part thereof a yoke (240) including a boss (250) adapted to be capable of being introduced in a corresponding cup (280) formed in a support member (270) fixed inside the associated side-member (100), the road set of wheels (17, 18, 19) being then in an upper retracted position and being capable of being placed either in this upper position or in a lower position by at least two hydraulic jacks (110) whose rods (110a) are pivoted to links (120) each of which is pivoted on one hand to the side-member (100) and on the other hand to the axle (182), the actuating jack (110) being preferably disposed inside the side-member (100).

8. A carrying platform according to claim 7, characterised in that the supension of the axle (182) is formed by stacks of rings (210) of an elastic material, such as an elastomer, interposed between the upper yoke (240) and a lower yoke (290) connected to a housing (160) fixed to the axle (182), the shifting link (120) of the axle (182) being pivoted to the lower yoke (290).

9. A carrying platform according to claim 7 or 8, characterised in that two successive axles (182) are connected by an anti-hunting synchronization arm (140), this arm (140) comprising a rod (300) fixed to the housings (160) of the axles there being connected to this rod a support disc (310) on each side of which are juxtaposed rings (320) of elastomer, and the assembly (320, 310; 320) is trapped within a housing (330) connected to a partly hollow rod (340) fixed to the housing (160) of an axle, the rod (300) freely sliding in the housing (330) inside the hollow part of the rod (340).

Fig.1

Fig.2

Fig.3

Fig.4

Fig.5

Fig.6

Fig.7

Fig.8

Fig.9

Fig.10

_Fig.11_

_Fig.12_

_Fig.13_

_Fig.14_

fig.15

fig.16

fig.17

fig.18

fig.19

fig.20

fig.21

fig.22

fig.23

fig.24

fig.25

0 112 778

fig. 28

fig. 26

fig. 27